Europäisches Patentamt

European Patent Office

Office européen des brevets

(11) Publication number: **0 450 087 A1**

# EUROPEAN PATENT APPLICATION
## published in accordance with Art. 158(3) EPC

(21) Application number: 90914768.8

(22) Date of filing: 05.10.90

(86) International application number: PCT/JP90/01293

(87) International publication number: WO 91/04657 (18.04.91 91/09)

(51) Int. Cl.⁵: **A01K 29/00**

(30) Priority: 05.10.89 JP 117246/89 U

(43) Date of publication of application: 09.10.91 Bulletin 91/41

(84) Designated Contracting States: AT BE CH DE DK ES FR GB IT LI LU NL SE

(71) Applicant: KOJIMA, Yujiro 20-12 Momoi 1-chome Suginami-ku Tokyo 167(JP)

(72) Inventor: KOJIMA, Yujiro 20-12 Momoi 1-chome Suginami-ku Tokyo 167(JP)

(74) Representative: Viard, Jean Cabinet VIARD 28 bis, avenue Mozart F-75016 Paris(FR)

(54) CAT ATTRACTANT APPLYING METHOD AND APPLICATOR.

(57) A cat attractant applying method consists of inserting a cat attractant-containing liquid into a liquid storage chamber in a penholder, driving the cat attractant-containing liquid in the storage chamber out of a pen point, and applying the liquid to, for example, the surface of a cat attracting object. A cat attractant applicator consists of a hollow penholder provided therein with a liquid storage chamber in which a cat attractant is held, a pen nib retainer provided at the end portion of the hollow penholder, and a pen nib held on the pen nib retainer. The tip of a writing brush or a pen nib is brought into contact with the surface of a cat attracting object to apply the cat attractant-containing liquid held in the liquid storage chamber to the same surface.

FIG. I

## TECHNICAL FIELD

This invention relates to a method of coating an attractant for a felid, particularly a cat and a means for coating the same, and more particularly a coating means of a pen type or a hair pencil type having a tank in which a liquid containing the attractant for the cat, i.e. a substance for which the cat remarkably takes a liking and excited state, is received.

In addition, this invention relates to a method of rearing the cat by using the attractant for the cat and a rearing means using the same, particularly a method of training the cat by using the attractant for the cat and a training means using the same.

Further, this invention relates to a coating means such as a felt tipped pen, a hair pencil type pen ("Fudepen" with the end portion composed of a fiber material) or the like, wherein a liquid containing the attractant for the cat is filled in a liquid-receiving chamber, said coating means being used in such a manner that the liquid is coated on articles for rearing and training the cat, and a method of rearing the cat by using the coating means.

This invention also relates to pet supplies for coating the attractant for the cat, wherein an appropriate amount of the attractant-containing liquid flows from a pen point and is coated on the place to which the cat is attracted, whereby it becomes possible to simply produce the effects that the cat is readily called to the specified place or the cat is relieved from stress or chafe.

## BACKGROUND OF THE ART

It has been known for old that Actinidia polygama and Actinidia arguta, which belong to Actinidiaceae, have a remarkable liking and excited state for a cat and broadly a felid such as, in addition to the cat, a Persian cat, puma, leopard, jackal, tiger, lion, lynx or the like, as a proverb goes that, for example, that's like giving catnip to a cat.

As mentioned above, a smell of Actinidia polygama floating in the air has the effect of relieving the cat from the stress and chafe and making a feeling stable. Thus, tree, branch and powder of Actinidia polygama are added to feed for the cat or used for a part of toy for the cat to rear the cat.

However, in the prior use of the tree, branch, powder or the like of Actinidia polygama or Actinidia arguta, the manner for use and the place for utilization are restricted by itself depending on the form. Since it is difficult to more broadly and simply utilize them according to the several manners and in the several places for use, it is desired by a cat lover to develop such a method as Actinidia polygama and Actinidia arguta can be simply used to rear the cat.

It is an object of this invention to solve the previous problems attendant on the use of Actinidia polygama and Actinidia arguta in rearing and training the cat.

## DISCLOSURE OF THE INVENTION

It is an object of this invention to provide a coating means, wherein an attractant for a cat can be readily coated on the surface of an object for rearing the cat, for example, the surface of an appropriate object arranged at the place to which the cat is attracted.

Namely, this invention relates to a method of attracting a cat which comprises coating a liquid containing an attractant for a cat on the surface of an object to form a coating layer of the attractant on said surface. In addition, this invention relates to a coating means for a liquid containing an attractant for a cat which comprises a pen body, a hollow penholder, a support body for supporting the pen body which is provided on the hollow penholder and a receiving chamber which is formed within the hollow penholder and receives the liquid containing at least one attractant.

In the case that this invention is directed to the felt tipped pen or hair pencil type pen, the coating means for the liquid containing the attractant for the felid comprises the pen body made of a fiber material, the hollow penholder, a cotton-like material provided in a hollow portion of said hollow penholder, a pen body supporting member which is provided in said hollow penholder and supports said pen body, and the liquid containing at least one attractant for the felid which is filled within the hollow portion of the hollow penholder with said cotton-like material.

In this invention, the attractant for the cat to be used includes publicly known attractant for a cat previously described in several literatures.

The above attractant for the cat in this invention includes an active component for attracting the felid which is contained in plants, such as Actinidia polygama, catnip, valerian, Boschniakia rossica ("oniku"), Actinidia arguta, buckbean, Japanese green gentian (Swertia japonica), ilex and the like; as a mixture, matatabilactone; and as a compound, monoterpene $\delta$-lactones, such as iridomyrmecin, isoiridomyrmecin, dihydronepetalactone, isoneonepetalactone, neonepetalactone, isoneonepetalactone or the like, actinidine of monoterpene alkaloid, $\beta$-phenetylalcohol, azelaic acid, matatabiol, citosterol, xylic acid and the like.

In this invention, the attractant for the cat, which takes the remarkable liking and excited state for the cat, is used in the form of the liquid, i.e. a solution or suspension, containing the attractant.

For example, the solution of the attractant for the cat is prepared by dissolving an extract from the plant containing the attractant due to water, alcohol or the like in alone or a mixture of two or three of water, ethanol or ethylene glycol which is a stable solvent. In this case, the attractant may be contained exceeding the solubility thereof in the solvent such as water or the like so that a part thereof is suspended therein. The solution of the attractant includes, in addition to the solution of the compounds of the above attractants, an extract liquid from the plant such as Actinidia polygama, catnip, Actinidia arguta, kiwi fruit, root of valerian, buckbean, Japanese green gentian, ilex and Boschniakia rossica ("oniwa"). Moreover, the suspension of the attractant may be prepared, in addition to the suspension of the above attractant, by suspending finely divided particles of the plant such as Actinidia polygama, catnip, Actinidia arguta, kiwi fruit, root of valerian, buckbean, Japanese green gentian, ilex and Boschniakia rossica in water, ethanol or the like. For example, use can be made by suspending the finely divided powders of leaves, trunks or roots of Actinidia polygama or Actinidia arguta in water or ethanol.

In this invention, the attractant-containing liquid is used in such a manner that the coating layer of the attractant is readily formed. Therefore, the attractant-containing liquid is used in the same manner as ink and a coloring applicator, for example, by putting it in an interior cotton tank of the felt tipped pen or an ink reservoir or ink cartridge of liquid-type writing utensils such as the felt tipped pen, a pumping pen or the like.

According to this invention, the attractant-containing liquid is received in the liquid receiving chamber in the penholder to form the coating means, and thus in case of rearing the cat, the cat can be attracted to the rearing means or the rearing place, for example, by taking off a cap of the coating means, pressing the pen point thereof against at least a part of the rearing means such as a toy, dung and urine vessel or feeder for rearing the cat or the like, or against at least a part of the rearing place such as a sleeping place or the like, to allow the attractant-containing liquid within the liquid receiving vessel to flow on at least a part of the rearing means or the rearing place, and applying the attractant to the rearing means or the rearing place.

BRIEF EXPLANATION OF DRAWINGS

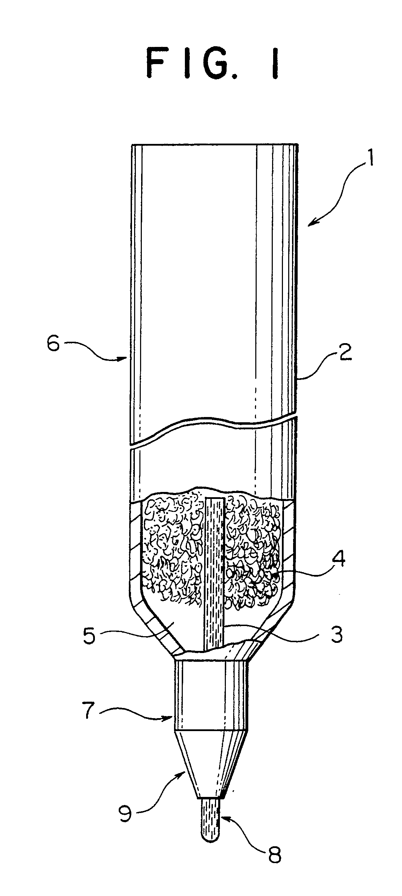

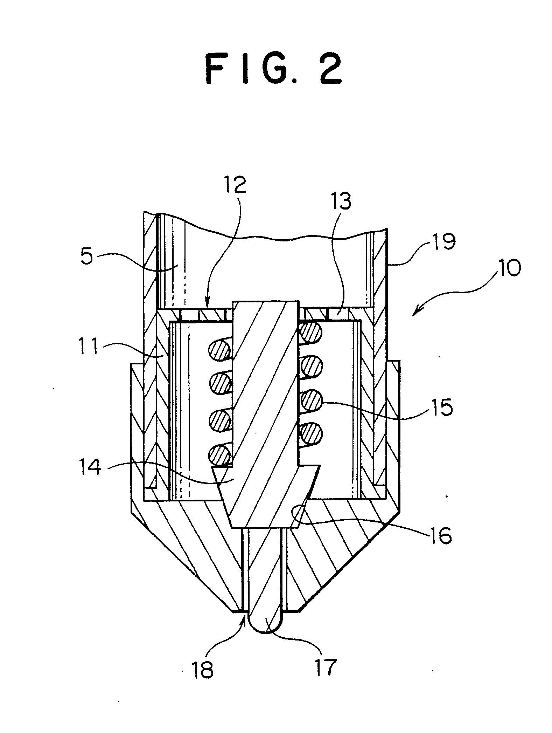

Fig. 1 is an explanation view giving an outline of an interior structure of an embodiment of this invention which is a partially cutaway view; and Fig. 2 is a longitudinal section giving an outline of a structure of a point portion according to another embodiment of this invention.

BEST MODE FOR CARRYING OUT THE INVENTION

With reference to the accompanying drawings, one embodiment of this invention will be explained as follows but this invention is not in any way limited to the following explanation and illustration.

This embodiment gives an application of this invention to a pen having a well-known structure. A pen body 1 of this embodiment has a hollow penholder 2, which is manufactured by an extension-forming of a good extendible metal such as aluminum or by a blow molding or injection molding of a thermoplastic resin, and a marking pen body 3 formed by a fiber bundle. The above hollow penholder 2 comprises a large diameter barrel portion 6 having therein a liquid receiving chamber 5 for receiving a solution of the attractant for the cat and an absorbent 4 of said solution composed of "somou" (a coarse or rough natural fiber, a synthetic fiber or the like; a small diameter barrel portion 7 for receiving a pen body supporting member (not shown) which jams and sets the marking pen body 3; and a convergent barrel portion 9 in the form of a truncated cone for guiding and holding a coating portion 8 at the end of the marking pen body 3.

In this embodiment, when the pen is not used, a cap (not shown) is removably mounted on the small diameter barrel portion 6 to avoid evaporation of the attractant-containing solution.

The pen 1 of this embodiment, which is constructed as above mentioned, is formed in such that the absorbent 4 of the solution composed of the coarse or rough natural fiber, synthetic fiber or the like is received in the large diameter barrel portion 5, together with the attractant-containing solution, the pen body supporting member on which the marking pen body 3 is jammed and set is fitted with the small diameter barrel portion 6 so as to put the coating portion 7 at the end of the marking pen body 3 out of the convergent barrel portion 8, and the cap is put on the small diameter barrel portion 6.

In using the pen 1 of this embodiment, the cap is taken off and the coating portion 7 at the pen point is pressed against, for example, the desired place of the object for attracting the cat, and thus it becomes possible to coat the attractant on said place.

Fig. 2 shows a sectional view of an outline of the end portion 10 of another type well-known coating means, in which the portion corresponding to that in Fig. 1 gives the same reference number.

In the end portion 10 of the coating means of this embodiment, a valve casing 11 is formed at a bottom portion of the liquid receiving chamber 5 for receiving the suspension of the attractant, a plurality of communicating holes 13 which communicates to the liquid receiving chamber 5 are formed through a ceiling portion 12 of the valve casing 11, and a valve body 14 provided in the interior of the valve casing 11 is arranged in a valve seat 16 so as to force it in direction of the point of the coating means with a spring 15. The lower portion of the valve body 14 is provided with a core body 17 for guiding the liquid. When the coating means is not used, a cap (not shown) is put on the point portion 10 of the coating means of this embodiment in such that the solvent in the attractant-containing solution does not evaporate through a flow path 18 in the point portion 10.

Since this embodiment is constructed as above mentioned, when using the cap is taken off from the point portion 10 and the core body 17 is pressed against the surface on which the attractant for the cat is coated, as a result the core body 17 pushes the valve body 14 which is followed by being transferred to the side of the liquid receiving chamber 5 and a gap is formed between the valve seat 16 and the valve body 14. Therefore, the suspension in the liquid receiving chamber 5 flows through the flow path 18 from the gap onto the surface to be coated, and the attractant is coated on the surface.

Accordingly, in this embodiment, the attractant for the cat can be simply and easily coated on the place to be coated, only by taking the penholder 19 and pressing the end of the core body 17 against the place.

## APPLICABILITY IN THE INDUSTRY

In this invention, the attractant-containing liquid is received in the liquid receiving chamber in the penholder of the coating means and thus when being used, it becomes easily possible to press the point of the coating means such as the hair pencil type pen, a pen or the like, for example, the point of the felt tipped pen, against the surface of the rearing means for the cat such as the toy, dung and urine vessel, feeder or the like, or against a part of the place such as the playing place, sleeping place or the like, to coat the attractant thereon. Thus, it becomes easy to rear the cat.

According to this invention, therefore, since in case of rearing the cat, the cat can be called to one with the attractant and thus it becomes easy to train the cat, the time for rearing the cat can be shortened as compared with the prior coating means for rearing the cat.

Since in this invention, it is possible to receive the solution of the attractant in the liquid receiving portion in the penholder of the coating means and put the cap on the pen point thereof, the coating means can be handy to carry and thus, in case of rearing the cat out of doors, it is possible to coat simply and easily the attractant as compared with the prior coating means of the attractant for rearing the cat.

Therefore, in rearing the cat, since the coating means of the attractant according to this invention can simply perform the coating of the attractant on the surface of the appropriate object at the suitable place and at all times, it becomes possible to control simply and easily the action of the cat as compared with the prior coating means for rearing the cat, thus a rearer can become more and more highly intimate with the cat and furthermore it becomes possible to reduce trouble due to the cat for the third party.

## Claims

1. A method of attracting a cat which comprises coating a liquid containing an attractant for the cat on the surface of an object to form a coating layer of the attractant on said surface.

2. A coating means for a liquid containing an attractant for a cat which comprises a pen body, a hollow penholder, a support body for supporting the pen body which is provided on the hollow penholder and a receiving chamber which is formed within the hollow penholder and receives the liquid containing at least one attractant.

3. A coating means for a liquid containing an attractant for a cat as set forth in claim 1, wherein the attractant for the cat is an active component for attracting a felid in Actinidia polygama, catnip, valerian, Boschniakia rossica, Actinidia arguta, buckbean, Japanese green gentian and ilex; as a mixture, matatabilactone; and as a compound, monoterpene δ-lactones, such as iridomyrmecin, isoiridomyrmecin, dihydronepetalactone, isoneonepetalactone, neonepetalactone, isoneonepetalactone or the like, actinidine of monoterpene alkaloid, β-phenetylalcohol, azelaic acid, matatabiol, citosterol and xylic acid.

4. A coating means for a liquid containing an attractant for a cat as set forth in claim 1, wherein the liquid containing the attractant for the cat is a solution of, as a mixture, matatabilactone; and as a compound, monoterpene δ-lactones, such as iridomyrmecin, isoiridomyrmecin, dihydronepetalactone, isoneonepetalactone, neonepetalactone, isoneonepetalactone or the like, actinidine of monoterpene alkaloid, β-phenetylalcohol, azelaic acid, matatabiol, citosterol and xylic acid.

5. A coating means for a liquid containing an attractant for a cat as set forth in claim 1, wherein the liquid is an extract from a plant such as Actinidia polygama, Actinidia arguta, kiwi fruit, valerian, buckbean, Japanese green gentian, ilex and Boschniakia rossica.

6. A coating means for a liquid containing an attractant for a cat, wherein the liquid containing the attractant for the cat is a suspension of matatabilactone, monoterpene δ-lactones, such as iridomyrmecin, isoiridomyrmecin, dihydronepetalactone, isoneonepetalactone, neonepetalactone, isoneonepetalactone or the like, actinidine of monoterpene alkaloid, β-phenetylalcohol, azelaic acid, matatabiol, citosterol and xylic acid, and a suspension of finely divided particles of Actinidia polygama, Actinidia arguta, kiwi fruit, valerian, buckbean, Japanese green gentian, ilex and Boschniakia rossica.

7. A coating means for a liquid containing an attractant for a cat as set forth in claim 1, wherein the liquid containing the attractant for the cat is a solution of the attractant for a felid in which a solvent is water, ethanol or ethylene glycol or a mixture of two or more thereof.

# FIG. 1

# F I G. 2

# INTERNATIONAL SEARCH REPORT

International Application No  PCT/JP90/01293

**I. CLASSIFICATION OF SUBJECT MATTER** (if several classification symbols apply, indicate all) 6

According to International Patent Classification (IPC) or to both National Classification and IPC

Int. $Cl^5$    A01K29/00

**II. FIELDS SEARCHED**

Minimum Documentation Searched 7

| Classification System | Classification Symbols |
|---|---|
| IPC | A01K29/00 |

Documentation Searched other than Minimum Documentation
to the Extent that such Documents are Included in the Fields Searched 8

| | |
|---|---|
| Jitsuyo Shinan Koho | 1942 - 1989 |
| Kokai Jitsuyo Shinan Koho | 1973 - 1989 |

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| X | JP, U, 60-104075 (Tamae Motobe), July 16, 1985 (16. 07. 85), (Family: none) | 1 |

\* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| December 14, 1990 (14. 12. 90) | December 25, 1990 (25. 12. 90) |

| International Searching Authority | Signature of Authorized Officer |
|---|---|
| Japanese Patent Office | |

Form PCT/ISA/210 (second sheet) (January 1985)